**Europäisches Patentamt**

**European Patent Office**

**Office européen des brevets**

(19)

(11) Veröffentlichungsnummer: **0 408 984 A1**

# (12) EUROPÄISCHE PATENTANMELDUNG

(21) Anmeldenummer: **90112740.7**

(22) Anmeldetag: **04.07.90**

(51) Int. Cl.⁵: **C02F 5/02**, C02F 1/46, C02F 1/48

(30) Priorität: **12.07.89 DE 3922908**

(43) Veröffentlichungstag der Anmeldung:
**23.01.91 Patentblatt 91/04**

(84) Benannte Vertragsstaaten:
**AT DE FR IT**

(71) Anmelder: **Joh.A. Benckiser Wassertechnik GmbH**
**Postfach 1140 Industriestrasse**
**D-6905 Schriesheim(DE)**

(72) Erfinder: **Zucholl, Klaus, Dr.**
**Niederfeldstrasse 123**
**D-6800 Mannheim 1(DE)**
Erfinder: **Nestler, Volker, Dr.**
**Berlichingenstrasse 61**
**D-7119 Niedernhau(DE)**

(74) Vertreter: **Wolf, Eckhard**
**Patentanwalt Dr.-Ing. Eckhard Wolf Postfach**
**13 10 01**
**D-7000 Stuttgart 1(DE)**

(54) Verfahren und Vorrichtung zur physikalischen Behandlung von strömendem hartem Wasser.

(57) Die Erfindung betrifft ein Verfahren zur physikalischen Behandlung von strömendem hartem Wasser, bei welchem der Wasserstrom (14) in zwei Teilströme (16, 18) geteilt wird und in den Teilströmen auf elektrochemischem Wege eine pH-Verschiebung nach entgegengesetzten Richtungen erzeugt wird, wobei im basischen Teilstrom Kristallkeime gebildet werden, die bei dem anschließenden Zusammenführen der Teilströme unter gegenseitiger Neutralisation relativ stabil sind. Das erfindungsgemäße Verfahren wird vorzugsweise zur Teilenthärtung des Wassers und zur Vermeidung von Steinabscheidungen an von dem Wasser durchströmten Wärmetauschern in Trink- und Brauchwasseranlagen verwendet.

Fig. 1

EP 0 408 984 A1

EP 0 408 984 A1

## VERFAHREN UND VORRICHTUNG ZUR PHYSIKALISCHEN BEHANDLUNG VON STRÖMENDEM HARTEM WASSER

Die Erfindung betrifft ein Verfahren und eine Vorrichtung zur physikalischen Behandlung von strömendem hartem Wasser sowie Verwendung des Verfahrens und der Vorrichtung für die Wasserbehandlung.

Bei der Trink- und Brauchwasserbehandlung ist es bekannt, Härtebildner, wie beispielsweise Calcium und Magnesium, mittels kationentauschender Harze ganz oder teilweise aus dem Wasser zu entfernen. Die Harze werden nach Erschöpfung ihrer Kapazität üblicherweise mit einer Natriumchloridlösung regeneriert. In der Praxis ist die hierfür verwendete Salzmenge stets größer als die stöchiometrisch nötige Salzmenge. Dies führt zu einer erhöhten Salzbelastung des Abwassers, die aus ökologischer Sicht unerwünscht ist. In der Betriebsphase tauscht das kationentauschende Harz die härtebildenden Ionen (z.B. Calcium und Magnesium) gegen Natrium. Wird das enthärtete Wasser als Lebensmittel verwendet, so erhöht es die individuelle Natriumaufnahme und stellt damit im Einzelfall eine mögliche Mehrbelastung für Bluthochdruckkranke dar.

Weiter ist es bei sogenannten physikalischen Wasserbehandlungen an sich bekannt, galvanische Elemente, magnetische oder elektrische Felder oder ähnliche physikalische Phänomene einzusetzen, um eine Beeinflussung der Wasserbeschaffenheit dahingehend zu erreichen, daß eine Steinbildung nicht in der unerwünschten Krustenform eintritt, daß eine vorhandene Steinbildung wieder abgebaut wird und daß Korrosionsvorgänge günstig beeinflußt werden. Über die Funktionsfähigkeit und die Wirkungsmechanismen derartiger Verfahren gibt es bisher keine eindeutigen Hinweise.

Der Erfindung liegt die Aufgabe zugrunde, ein Verfahren und eine Vorrichtung zur Behandlung von strömendem hartem Wasser zu entwickeln, mit dem die Härtebildner des Wassers in ihren physikalischen und chemischen Eigenschaften geändert werden können.

Zur Lösung dieser Aufgabe werden die in den Patentansprüchen 1 bzw. 15 angegebenen Merkmalskombinationen vorgeschlagen. Weitere vorteilhafte Ausgestaltungen und Weiterbildungen des Erfindungsgedankens ergeben sich aus den abhängigen Ansprüchen.

Die Erfindung geht von der Erkenntnis aus, daß bei Vorhandensein einer ausreichenden Anzahl von Kristallkeimen im Wasser im Falle einer Kalkübersättigung beispielsweise durch Wassererwärmung ein Kristallwachstum bevorzugt in der wässrigen Phase an den Kristallkeimen stattfindet und eine Steinbildung an den angeströmten, gegebenenfalls beheizten Oberflächen vermieden werden kann. Um dies zu erreichen, wird gemäß der Erfindung vorgeschlagen, daß der Wasserstrom in zwei Teilströme geteilt wird, daß in den Teilströmen eine pH-Verschiebung nach entgegengesetzten Richtungen unter Bildung eines basischen und eines sauren Teilstroms erzeugt wird, daß im basischen Teilstrom Kristallkeime gebildet werden und daß die beiden Teilströme anschließend unter gegenseitiger Neutralisation wieder zusammengeführt werden.

Gemäß einer bevorzugten Ausgestaltung der Erfindung werden die beiden durch eine ionendurchlässige Trenn-und Leitwand voneinander getrennten Teilströme zum Zwecke der elektrochemischen pH-Verschiebung einem gemeinsamen, im wesentlichen senkrecht zur Strömungsrichtung und zur Trenn- und Leitwand ausgerichteten elektrischen Gleichfeld ausgesetzt, wobei das elektrische Gleichfeld zur Vermeidung von Kalkablagerungen auf der einen oder anderen Seite in vorgegebenen Zeitabständen umgepolt werden kann.

Die im Zuge der pH-Verschiebung entstehenden Gase $H_2$, $O_2$ und $CO_2$ können aus den Teilströmen vor oder nach ihrem Zusammenführen entfernt oder im Falle von Wasserstoff und Sauerstoff katalytisch rekombiniert werden.

Für bestimmte Anwendungsfälle, beispielsweise bei der Teilentkalkung des Wassers, können die im basischen Teilstrom gebildeten Kristallkeime vorzugsweise vor oder kurz nach dem Zusammenführen der Teilströme entfernt, vorzugsweise herausgefiltert werden. Um eine gewünschte Wasserhärte zu erhalten, kann das Verfahren auch mehrstufig ausgestaltet werden, indem der Wasserstrom mindestens zweimal hintereinander in Teilströme aufgeteilt, einer pH-Verschiebung ausgesetzt und vor oder nach dem Entfernen der im basischen Teilstrom gebildeten Kristallkeime wieder zusammengeführt wird. Bei größeren Durchflußmengen kann es außerdem zweckmäßig sein, daß der Wasserstrom in mehrere Parallelströme getrennt wird, bevor diese in die Teilströme aufgeteilt und der pH-Verschiebung ausgesetzt werden. Um darüber hinaus bei variablen Durchflußmengen immer die gleiche Wasserqualität zu erhalten, ist es vorteilhaft, wenn die durch das elektrische Feld erzeugte elektrische Stromstärke nach Maßgabe des gemessenen Wasserdurchflusses geregelt wird. Es hat sich dabei als zweckmäßig erwiesen, wenn je nach Durchflußrate eine elektrische Stromdichte von etwa 1 bis 50 mA/cm², vorzugsweise von 10 bis 20 mA/cm² eingestellt wird. Um eine ausreichende Keimdichte zu erhalten, sollten im basischen Teilstrom pH-Werte von mehr als 8,5,

2

vorzugsweise von mehr als 9 eingestellt werden, während die damit einhergehende pH-Absenkung im sauren Teilstrom zu Werten unter 6 führen kann.

Da die Keimbildung nach der pH-Verschiebung eine gewisse Zeit in Anspruch nimmt, hat es sich als vorteilhaft erwiesen, wenn zumindest einer der Teilströme, vorzugsweise der basische Teilstrom, im Anschluß an die pH-Verschiebung über eine Verzögerungsstrecke geleitet wird. Die Zeit zwischen der Aufteilung des Wasserstroms und der Zusammenführung der Teilströme sollte dabei zwischen 0,05 bis 20 min, vorzugsweise 0,1 bis 1 min betragen.

Um zu vermeiden, daß die im Zuge der pH-Verschiebung gebildeten Kristallkeime sich nach dem Zusammenführen der Teilströme alsbald wieder auflösen, wird gemäß einer bevorzugten Ausgestaltung der Erfindung vorgeschlagen, daß die Länge der Verzögerungsstrecken der Teilströme und die Umpolzeit des elektrischen Feldes so aufeinander abgestimmt werden, daß in abwechselnder Folge immer zwei saure bzw. zwei basische Teilströme zusammengeführt und diese im Verlauf ihres weiteren gemeinsamen Strömungswegs allmählich miteinander vermischt werden.

Eine bevorzugte Vorrichtung zur Durchführung des erfindungsgemäßen Verfahrens weist zwei Durchflußzweige auf, lin die der Wasserstrom aufteilbar ist und die unter Bildung eines basischen und eines sauren Teilstroms einer gemeinsamen, entgegengesetzt gerichteten pH-Verschiebung aussetzbar sind, wobei im basischen Teilstrom Kristallkeime ausfällbar sind. Die beiden Durchflußzweige sind dabei zweckmäßig durch eine ionendurchlässige Trenn- und Leitwand voneinander getrennt, wobei auf den der Trenn- und Leitwand gegenüberliegenden Seiten der Durchflußzweige je eine Elektrode einer gemeinsamen Elektrolysezelle zur elektrochemischen Erzeugung der pH-Verschiebung angeordnet ist.

Der auf diese Weise gebildete elektrochemische Reaktor besteht vorteilhafterweise aus zwei im wesentlichen spiegelbildlich zueinander ausgebildeten, jeweils einen der Durchflußzweige in Form von Halbschalen enthaltende Formteilhälften, die unter Zwischenklemmen einer zugleich als Dichtung zwischen den Formteilhälften dienenden Trenn- und Leitwand flanschartig miteinander verbindbar sind und von denen mindestens eine mit einem Zu- oder Abflußstutzen versehen ist. Die Durchflußzweige sind zweckmäßig als an ihren einander zugewandten Seiten durch die Trenn- und Leitwand begrenzte, vorzugsweise im Querschnitt rechteckige Kanäle ausgebildet, die an einander spiegelbildlich gegenüberliegenden Stellen mit je einer der Elektroden bestückt sein können. Die Formteilhälften sind vorteilhafterweise als Spritzgußteile aus Kunststoff hergestellt, die an vorzugsweise metallischen Gehäuseflanschen miteinander verbindbar sind. Innerhalb des Reaktors kann außerdem ein von dem Wasserstrom oder einem der Teilströme durchflossener, vorzugsweise als Flügelraddetektor ausgebildeter Durchflußmesser für die Mengenregelung angeordnet sein.

Die Trenn- und Leitwand ist beispielsweise als poröse Filterplatte oder als semipermeable Membran ausgebildet, während die Elektroden der elektrochemischen Anordnung aus einem mit einem Platinmetall oder Gold beschichteten Metall, wie Titan, Tantal oder Niob, aus Graphit oder einem leitfähigen Keramikmaterial bestehen können.

Mehrere der genannten elektrochemischen Reaktoren können in Sandwich-Bauweise durch an die Zu- und Abflußstutzen anschließbare Übergangsstücke stapelweise in Serien- und/oder Parallelschaltung miteinander verbunden werden.

Das erfindungsgemäße Verfahren und die erfindungsgemäße Vorrichtung werden bevorzugt zur Teilenthärtung von Wasser und/oder zur Vermeidung von Steinabscheidungen an von dem Wasser durchströmten Wärmetauschern in Trink- und/oder Brauchwasseranlagen verwendet.

Im folgenden wird die Erfindung anhand einiger in der Zeichnung schematisch dargestellter Ausführungsbeispiele näher erläutert. Es zeigen

Fig. 1 bis 5 verschiedene Ausgestaltungen eines elektrochemischen Reaktors in schematischer Darstellung;

Fig. 6 eine Serienschaltung zweier elektrochemischer Reaktoren;

Fig. 7 eine Draufsicht auf eine von zwei Formteilhälften eines Reaktors in Sandwich-Bauweise;

Fig. 8 ein Schema eines Versuchsaufbaus eines Gerätes zur physikalischen Wasserbehandlung;

Fig. 9 mit dem Versuchsaufbau nach Fig. 8 aufgenommene Meßdiagramme.

Die in der Zeichnung dargestellten elektrochemischen Reaktoren enthalten eine Elektrolysezelle 8 mit Elektroden 1 und 2, die durch eine beispielsweise als poröse Filterplatte oder als semipermeable Membran ausgebildete, zu den Elektroden 1 und 2 parallele Trennwand 3 in zwei Durchflußzweige 10,12 unterteilt ist. Die Elektrolysezelle 8 wird mit einem Wasserstrom 14 beaufschlagt, der vor Eintritt in die Elektrolysezelle 8 in zwei Teilströme 16,18 aufgeteilt wird, von denen einer (16) den Durchflußzweig 10 und der andere (18) den Durchflußzweig 12 durchströmt. Ausgangsseitig werden die Teilströme 16,18 gegebenenfalls über Verzögerungsstrecken 5 an einer Mündungsstelle 20 wieder zusammengeführt und gelangen über eine Leitung 22 zu einem nicht dargestellten Verbraucher.

EP 0 408 984 A1

Wird an die Elektroden 1,2 der Elektrolysezelle ein elektrisches Gleichfeld angelegt, so verschiebt sich auf der Seite der Kathode (-) der ursprüngliche pH-Wert des Wassers in Richtung basisch und auf der Seite der Anode (+) in Richtung sauer. Im basischen Bereich verschiebt sich das Gleichgewicht der Härtebildner, beispielsweise von der Hydrogencarbonatform in die Carbonatform. Da die Carbonatform schwerer löslich ist als die Hydrogencarbonatform, fallen die Härtebildner in ihrer Carbonatform als Kristallkeime aus:

$$HCO_3^- + OH^- \text{ --- } CO_3^{2-} + H_2O$$
$$Ca^{2+} + CO_3^{2-} \text{ --- } CaCO_3 \downarrow$$

Je nach Wasserzusammensetzung und Betriebsbedingungen der Elektrolysezelle können daneben noch andere chemische Reaktionen ablaufen, z.B.

$$Ca^{2+} + 2OH^- \text{ ---> } Ca(OH)_2 \downarrow$$
$$Mg^{2+} + 2OH^- \text{ ---> } Mg(OH)_2 \downarrow$$
$$Mg^{2+} + CO_3^{2-} \text{ ---> } MgCO_3 \downarrow$$

Diese Verbindungen können ebenfalls als Kristallisationskeime wirken. Die Bildung schwerlöslicher Verbindungen im Kathodenraum der Zelle wird zusätzlich noch durch eine Migration von Kationen verstärkt.

Die bei der Elektrolyse entstehenden Gase $H_2$, $O_2$ können beispielsweise mit Entlüftern 4 entsorgt oder katalytisch unter Bildung von Wasser rekombiniert werden.

Die Strömungsgeschwindigkeit in den beiden Elektrodenräumen der Zelle muß nicht unbedingt gleich groß sein. So kann es vorteilhaft sein, die Strömungsgeschwindigkeit im Kathodenraum (basischer Teilstrom) z.B. durch Drosselorgane zu verringern, um hierdurch einen höheren pH-Wert und damit eine höhere Kalkübersättigung zu erhalten.

Um den im Kathodenraum der Elektrolysezelle gebildeten Kristallkeimen Gelegenheit zum weiteren Wachstum zu geben, werden der saure und der basische Teilstrom über einen längeren Zeitraum hinweg auf einer Verzögerungs strecke 5 getrennt voneinander geführt, bis sie eine ausreichende Größe erreicht haben. Ausreichende Größe bedeutet hier, daß die Kristallkeime entweder mit üblichen Filtern aus dem basischen Teilstrom entfernt werden können oder aber nach der Zusammenführung der beiden Teilströme über längere Zeit stabil bleiben und nicht sofort in Lösung gehen. Im ersten Fall wird das Wasser teilenthärtet und damit die Gefahr des Verkalkens von Wärmetauschern im anschließenden Trink- oder Brauchwasser herabgesetzt. Im zweiten Fall ist das Wasser nicht nur teilenthärtet, sondern es führt zusätzlich Kristallkeime mit sich, die in der Nähe von wärmetauschenden Oberflächen mit diesen um die weitere Anlagerung von Calciumcarbonat oder anderen Härtebildnern konkurrieren. Ist die Oberfläche aller Kristallkeime in der unmittelbaren Umgebung des Wärmetauschers größer als die Fläche des Wärmetauschers selbst, so scheidet sich der Kalk bevorzugt auf den Keimen und nicht auf der Oberfläche ab. Die Keime wachsen weiter und lagern sich entweder als Schlamm unterhalb des Wärmetauschers ab oder werden vom Wasserstrom als Partikel mitgeführt und ausgeschwemmt. Sind Partikel in Wasser unerwünscht, weil beispielsweise Armaturendichtungen geschützt werden müssen, so kann ein Filter 6 in die Wasserleitung hinter dem Wärmetauscher eingebaut werden. Weiter ist es sinnvoll, den Bodensatz unter dem Wärmetauscher von Zeit zu Zeit manuell oder automatisch zu entsorgen.

Die Ausfällung von Calciumcarbonat geht mit einer Er höhung des $CO_2$-Gehaltes des Wassers einher. Sollte sich dieses Wasser z.B. aus korrosionschemischer Sicht für die weitere Verwendung als ungünstig erweisen, so kann der $CO_2$-Gehalt durch ein übliches Entgasungsverfahren wieder gesenkt werden. Dabei können gleichzeitig die Elektrolysegase ($H_2$, $O_2$) entfernt werden.

Wenn es unerwünscht ist, daß das behandelte Wasser saurer als das Rohwasser ist, besteht die Möglichkeit, einen Teil des sauren Teilstroms abzuzweigen und zu verwerfen. Alternativ hierzu kann dieser Teilstrom auch über ein Aufhärtungsfilter, z.B. mit Dolomit-Füllung, geleitet und dadurch aufgehärtet und im pH-Wert angehoben werden.

Je nach der Konzentration der Härtebildner im Wasser, nach der Strömungsführung durch den elektrochemischen Reaktor und nach dem Material der Trenn- und Leitwand kann die der Kathode zugewandte Seite der Trenn- und Leitwand 3 oder die Kathode selbst im Laufe der Zeit verkalken, wenn das elektrische Feld zwischen den beiden Elektroden nicht von Zeit zu Zeit umgepolt wird. Durch das Umpolen werden die basische und die saure Zone des elektrochemischen Reaktors vertauscht, so daß Kalkniederschläge auf der Anodenseite wieder in Lösung gehen, bevor sie sich zu dicken Schichten aufbauen können. Dicke Kalkschichten behindern den Ladungstransport zwischen den Elektroden und können schließlich zum Versagen der Elektrolyseanordnung führen. Wird das elektrische Feld an den Elektroden von Zeit zu Zeit umge polt, so können am Ende der Verzögerungsstrecke beide Teilströme einzeln oder unmittelbar hinter dem Zusammenführungspunkt 20 gemeinsam filtriert werden.

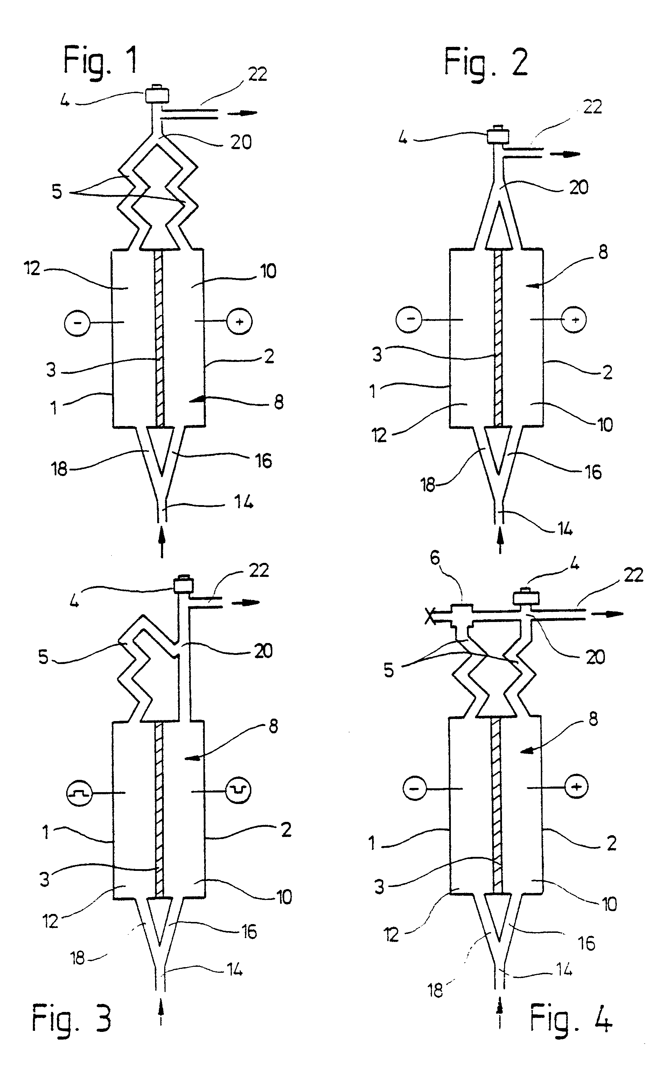

Die Umpolung der Zelle kann in einer speziellen Verfahrensvariante dazu genutzt werden, daß nur eine Zellhälfte mit einer gegebenenfalls kurzen Verzögerungsstrecke versehen wird und die Umpolfrequenz der Zellelektroden abhängig von der Strömungsgeschwindigkeit des Wassers so gewählt wird, daß sich nach

4

dem Zusammenführen der Teilströme Bereiche mit und ohne Kalkkeime bilden, die sich erst auf dem Weg zum Verbraucher, z.B. in der Wasserleitung, durch Diffusion oder Konvektion vermischen. Bei dieser Variante wird nur eine Verzögerungsstrecke benötigt (Fig. 3).

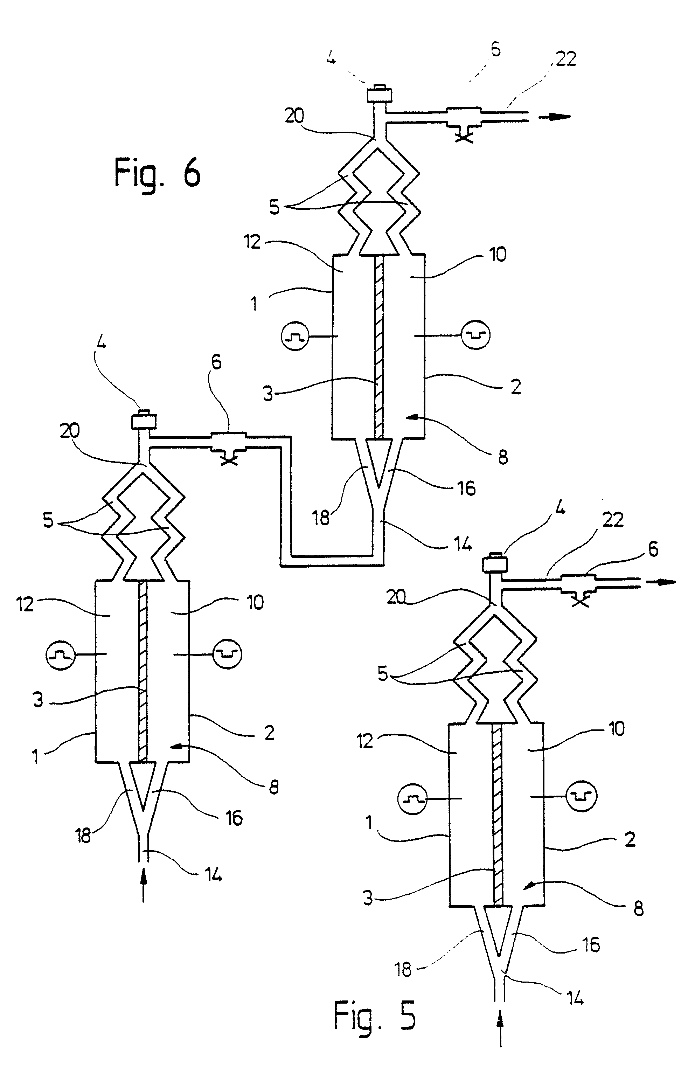

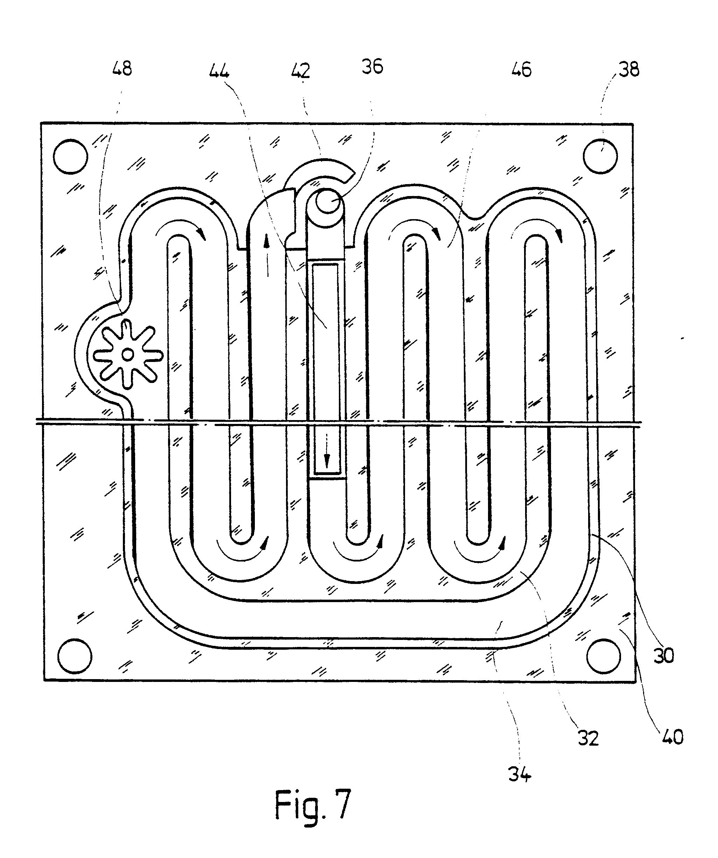

Um die Teilentkalkung zu erhöhen, ist es möglich, mehrere Elektrolysezellen mit nachgeschalteter Filterstufe 6 der in Fig. 5 gezeigten Art hintereinander zu schalten (Fig. 6).

In Fig. 7 ist die als vordere Hälfte ausgebildete Bodenplatte eines sandwichartig aus zwei Formteilhälften zusammengesetzten elektrochemischen Reaktors mit Verzögerungsstrecke dargestellt. Die Bodenplatte 30 besteht ebenso wie die nicht gezeigte Deckelplatte aus einem Formteil 32 aus Kunststoff, in welches ein mäanderförmig geführter, im Querschnitt rechteckiger, zur einen Seite offener Kanal 34 schalenartig eingeformt ist. Die im wesentlichen spiegelbildlich ausgebildeten Formteile 30 werden unter Zwischenklemmen einer nicht dargestellten, zugleich als Dichtung dienenden semipermeablen Membran mittels durch die Bohrungen 38 im Flansch 40 hindurchgreifenden Zugstangen so gegeneinander gepreßt, daß die Kanäle 34 in der Boden- und der Deckelplatte mit ihrer offenen Seite einander zugewandt und durch die Membran voneinander getrennt sind. Auf diese Weise entstehen zwei Durchflußzweige, die über Zulaufstutzen 36 mit je einem von einem Wasserstrom abgezweigten Teilstrom beaufschlagbar sind. Innerhalb des Reaktors werden die Teilströme in den Kanälen 34 zunächst durch eine Elektrolysestrecke zwischen zwei einander spiegelbildlich in der Bodenplatte und der Deckelplatte gegenüberliegende Elektroden 44 geführt, um anschließend durch die Verzögerungsstrecke 46 an einem als Flügelraddetektor ausgebildeten Mengenmesser 48 vorbei zu dem Ausgangsstutzen 42 geleitet zu werden. Bei dem gezeigten Ausführungsbeispiel mit den Abmessungen 40 x 40 x 10 cm und 10 integrierten Umlenkstrecken erhält man eine gesamte Kanallänge von etwa 300 cm. Bei einem Kanalquerschnitt von 20 x 20 mm$^2$ kann eine Durchflußrate von 2,5 m$^3$/h erzielt werden. Mehrere derartiger Reaktoren können durch an die Anschlüsse 36,42 anschließbare Übergangsstücke stapelweise in Parallel- oder Serienschaltung miteinander verbunden werden.

**Ausführungsbeispiel**

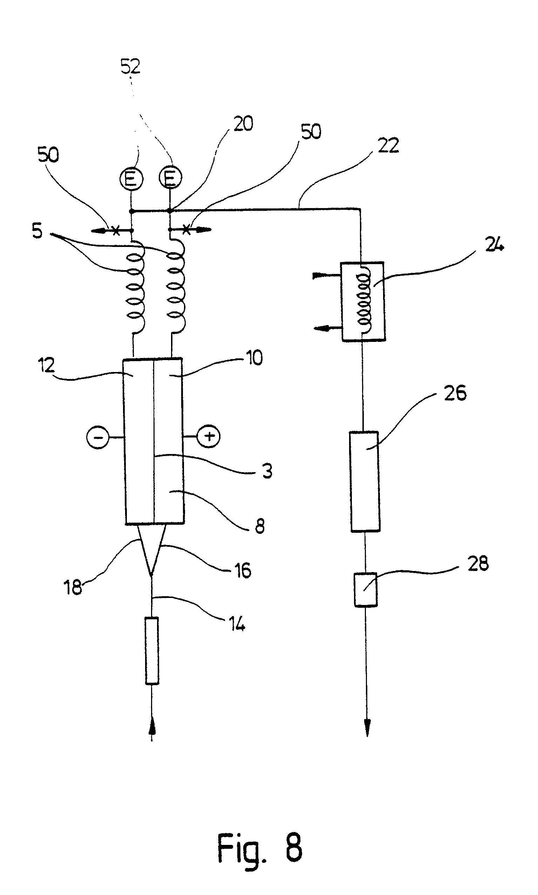

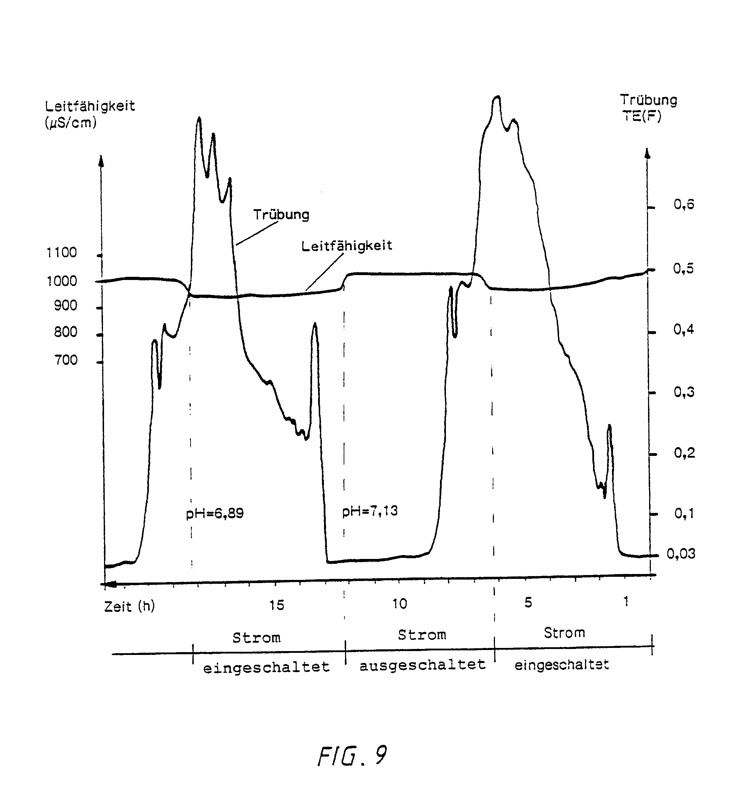

In einer Versuchsanordnung, deren Aufbau in Fig. 8 schematisch dargestellt ist, wurden quantitative Messungen durchgeführt, deren wichtigste Ergebnisse in dem Diagramm nach Fig. 9 dargestellt sind. Die Elektrolysezelle 8 wurde eingangsseitig mit zwei Teilströmen 16,18 eines Wasserstroms 14 beaufschlagt, die ausgangsseitig durch je eine Verzögerungsstrecke 5 geleitet und an der Stelle 20 wieder zusammengeführt wurden. Von dort aus wurde der Wasserstrom über eine Leitung 22 und eine Kühlstrecke 24, an der ausgangsseitig eine konstante Temperatur eingestellt wurde, zu einer Meßstation 26 für die Messung des pH-Werts, der Temperatur und der Leitfähigkeit sowie zu einem Streulichttrübungsmesser 28 geleitet. Weiter waren an den Ausgängen der Verzögerungsstrecken Probehähne 50 zur Entnahme von Wasser aus den Teilströmen 16,18, insbesondere zur pH-Wertmessung vorgesehen. Die Entlüfter 52 am Ausgang der Verzögerungsstreckten sorgten dafür, daß die Teilströme vor der Zusammenführung in der Meßstrecke vollständig entgast wurden.

Die Daten des Versuchsaufbaus und der Versuchsdurchführung waren wie folgt:

```
Elektrodenfläche                        20 cm²
Elektrodenabstand                       1,3 cm
Elektrodenmaterial                      platiniertes Titan
Membranmaterial                         gesintertes Polyethylen
Porengröße der Membran                  10 µm
Wandstärke der Membran                  3 mm
Länge Verzögerungsstrecken             8 m (Schläuche)
Durchmesser Verzögerungsstrecke 7 mm
```

Die Versuchsreihe wurde mit Stadtwasser der Stadt Schriesheim durchgeführt mit folgenden Analysewerten:

| | |
|---|---|
| Gesamthärte | 26,31 °dH |
| Carbonathärte | 15,50 °dH |
| $Ca^{++}$ | 156.43 mg/l |
| $Mg^{++}$ | 19.37 mg/l |
| $Cl^-$ | 67.45 mg/l |
| $SO_4^{--}$ | 65.35 mg/l |
| $NO_3^-$ | 52.08 mg/l |
| $CO_2$ | 26,22 mg/l |

Die in den Meßstationen 26 und 28 ermittelten Meßwerte für die Leitfähigkeit des Wassers in µS/cm und der Trübung in Einheiten bezogen auf die Normtrübung in Formazin sind in Fig. 9 über der Zeit in Stunden aufgetragen. Aus dem Verlauf der Diagramme ergibt sich, daß die auf die Bildung von Kristallkeimen zurückzuführende Trübung bei eingeschaltetem Strom um den Faktor 20 zunimmt, während die Leitfähigkeit aus diesem Grund um etwa 8 % abnimmt. Auch der pH-Wert des neutralisierten Wassers sinkt beim Einschalten des Stroms von etwa 7,13 auf 6,89, was auf eine Ansäuerung durch das in Lösung gehende $CO_2$ zurückzuführen ist.

Die auf diese Weise gebildeten Kristallkeime können sowohl zur Teilenthärtung des Wassers als auch zur Vermeidung einer Steinbildung an Wärmetauscherflächen ausgenutzt werden.

**Ansprüche**

1. Verfahren zur Behandlung von strömendem hartem Wasser, **dadurch gekennzeichnet**, daß der Wasserstrom in zwei Teilströme geteilt wird, daß in den Teilströmen eine pH-Verschiebung nach entgegengesetzten Richtungen unter Bildung eines basischen und eines sauren Teilstroms erzeugt wird, daß im basischen Teilstrom Kristallkeime gebildet werden und daß die beiden Teilströme anschließend unter gegenseitiger Neutralisation wieder zusammengeführt werden.

2. Verfahren nach Anspruch 1, **dadurch gekennzeichnet**, daß die Richtung der pH-Verschiebung in den beiden Teilströmen von Zeit zu Zeit umgekehrt wird.

3. Verfahren nach Anspruch 1 oder 2, **dadurch gekennzeichnet**, daß zumindest einer der Teilströme, vorzugsweise der basische Teilstrom, im Anschluß an die pH-Verschiebung über eine Verzögerungsstrecke geleitet wird.

4. Verfahren nach einem der Ansprüche 1 bis 3, **dadurch gekennzeichnet**, daß die beiden durch eine ionendurchlässige Trenn- und Leitwand voneinander getrennten Teilströme zum Zwecke der elektrochemischen pH-Verschiebung einem gemeinsamen, im we sentlichen senkrecht zur Strömungsrichtung und zur Trenn- und Leitwand ausgerichteten elektrischen Gleichfeld ausgesetzt werden.

5. Verfahren nach Anspruch 4, **dadurch gekennzeichnet**, daß das elektrische Gleichfeld in vorgegebenen Zeitabständen umgepolt wird.

6. Verfahren nach einem der Ansprüche 1 bis 5, **dadurch gekennzeichnet**, daß die im Zuge der pH-Verschiebung entstehenden Gase, wie $H_2$, $O_2$ und/oder $CO_2$ aus den Teilströmen vor oder nach ihrem Zusammenführen entfernt oder katalytisch rekombiniert werden.

7. Verfahren nach einem der Ansprüche 1 bis 6, **dadurch gekennzeichnet**, daß die im basischen Teilstrom gebildeten Kristallkeime vorzugsweise vor oder kurz nach dem Zusammenführen der Teilströme entfernt, vorzugsweise herausgefiltert werden.

8. Verfahren nach Anspruch 7, **dadurch gekennzeichnet**, daß der Wasserstrom mindestens zweimal hintereinander in Teilströme aufgeteilt, einer pH-Verschiebung ausgesetzt und vor oder nach dem Entfernen der im basischen Teilstrom gebildeten Kristallkeime wieder zusammengeführt wird.

9. Verfahren nach einem der Ansprüche 1 bis 8, **dadurch gekennzeichnet**, daß der Wasserstrom in mehrere Parallelströme getrennt wird, bevor diese in die Teilströme aufgeteilt und der pH-Verschiebung ausgesetzt werden.

10. Verfahren nach einem der Ansprüche 4 bis 9, **dadurch gekennzeichnet,** daß die durch das elektrische Feld erzeugte elektrische Stromstärke nach Maßgabe des gemessenen Wasserdurchflusses geregelt wird.

11. Verfahren nach Anspruch 10, **dadurch gekennzeichnet,** daß je nach Durchflußrate eine elektrische Stromdichte von etwa 1 bis 50 mA/cm$^2$, vorzugsweise 10 bis 20 mA/cm$^2$ eingestellt wird.

12. Verfahren nach einem der Ansprüche 1 bis 11, **dadurch gekennzeichnet,** daß die pH-Werte in den Teilströmen auf weniger als 6,5 einerseits und mehr als 8,5 andererseits eingestellt werden.

13. Verfahren nach einem der Ansprüche 3 bis 12, **dadurch gekennzeichnet,** daß die Länge der Verzögerungsstrecken und die Umpolzeit so aufeinander abgestimmt werden, daß in abwechselnder Folge immer zwei saure bzw. zwei basische Teilströme zusammengeführt und diese im Verlauf ihres weiteren Strömungswegs miteinander vermischt werden.

14. Verfahren nach einem der Ansprüche 1 bis 13, **dadurch gekennzeichnet,** daß die Zeit zwischen der Aufteilung des Wasserstroms und der Zusammenführung der Teilströme 0,05 bis 20 min, vorzugsweise 0,1 bis 1 min beträgt.

15. Verfahren nach einem der Ansprüche 1 bis 14, **dadurch gekennzeichnet,** daß ein Teil des sauren Teilstroms verworfen wird.

16. Verfahren nach einem der Ansprüche 1 bis 15, **dadurch gekennzeichnet,** daß zumindest ein Teil des sauren Teilstroms, vorzugsweise über ein Aufhärtungsfilter, z.B. mit Dolomit-Füllung, aufgehärtet wird.

17. Vorrichtung zur physikalischen Behandlung von strömen dem hartem Wasser zur Durchführung des Verfahrens nach einem der Ansprüche 1 bis 16, **dadurch gekennzeichnet,** daß der Wasserstrom (14) in zwei Durchflußzweige (10,12) aufteilbar ist, die unter Bildung eines basischen und eines sauren Teilstroms einer gemeinsamen, entgegengesetzt gerichteten pH-Verschiebung aussetzbar sind, wobei im basischen Teilstrom Kristallkeime ausfällbar sind.

18. Vorrichtung nach Anspruch 17, **dadurch gekennzeichnet,** daß die pH-Verschiebung in beiden Teilströmen in vorgegebenen Zeitabständen umkehrbar ist.

19. Vorrichtung nach Anspruch 17 oder 18, **dadurch gekennzeichnet,** daß zumindest einer der Durchfluß zweige (10,12) eine Drossel- oder Verzögerungsstrecke (5) für den betreffenden Teilstrom enthält.

20. Vorrichtung nach einem der Ansprüche 17 bis 19, **gekennzeichnet durch** eine elektrochemische Anordnung (8) zur Erzeugung der pH-Verschiebung in den beiden Durchflußzweigen (10,12).

21. Vorrichtung nach Anspruch 20, **dadurch gekennzeichnet,** daß die beiden Durchflußzweige (10,12) durch eine ionendurchlässige Trenn- und Leitwand (3) voneinander getrennt sind und daß auf den der Trenn- und Leitwand (3) gegenüberliegenden Seiten der beiden Durchflußzweige (10,12) Elektroden (1,2) einer gemeinsamen Elektrolysezelle (8) zur elektrochemischen Erzeugung der pH-Verschiebung angeordnet ist.

22. Vorrichtung nach Anspruch 21, **dadurch gekennzeichnet,** daß die Elektroden (1,2) der Elektrolysezelle (8) in vorgegebenen Zeitabständen umpolbar sind (Fig. 5,6).

23. Vorrichtung nach einem der Ansprüche 17 bis 22, **gekennzeichnet durch** einen elektrochemischen Reaktor (30), bestehend aus zwei im wesentlichen spiegelbildlich zueinander ausgebildeten, jeweils einen der Durchflußzweige in Form von Halbschalen enthaltenden Formteilhälften (32), die unter Zwi schenklem men einer zugleich als Dichtung zwischen den Formteilhälften (32) dienenden Trenn- und Leitwand (3) sandwichartig miteinander verbindbar und mit einem Zu- und Abflußstutzen (34,42) versehen sind.

24. Vorrichtung nach Anspruch 23, **dadurch gekennzeichnet,** daß die Formteilhälften (32) an einander spiegelbildlich gegenüberliegenden Stellen im Bereich der Durchflußzweige (34) mit je einer der Elektroden (44) bestückt sind.

25. Vorrichtung nach Anspruch 23 oder 24, **dadurch gekennzeichnet,** daß die Durchflußzweige (34) als an ihren einander zugewandten Seiten durch die Trenn-und Leitwand begrenzte, vorzugsweise im Querschnitt rechteckige Kanäle ausgebildet sind.

26. Vorrichtung nach einem der Ansprüche 23 bis 25, **dadurch gekennzeichnet,** daß die Formteilhälften (32) aus Kunststoff bestehen, die an vorzugsweise metallischen Gehäuseflanschen (40) miteinander verbindbar sind.

27. Vorrichtung nach einem der Ansprüche 23 bis 26, **gekennzeichnet durch** einen im Reaktor (30) angeordneten, vom Wasserstrom oder einem der Teilströme durchflossenen, vorzugsweise als Flügelraddetektor ausgebildeten Durchflußmesser (48).

28. Vorrichtung nach einem der Ansprüche 17 bis 27, **dadurch gekennzeichnet,** daß die Trenn- und Leitwand (3) als poröse Filterplatte oder als semipermeable Membran ausgebildet ist.

29. Vorrichtung nach einem der Ansprüche 23 bis 28, **dadurch gekennzeichnet,** daß mehrere elektrochemische Reaktoren (32) durch an die Zu- und Abflußstutzen (36,42) anschließbare Übergangsstücke stapelweise in Serien- und/oder Parallelschaltung miteinander verbindbar sind.

30. Vorrichtung nach einem der Ansprüche 17 bis 29, **dadurch gekennzeichnet**, daß die Elektroden (44) der elektrochemischen Anordnung aus einem mit einem Platinmetall oder Gold beschichteten Metall, wie Titan, Tantal oder Niob bestehen.

31. Vorrichtung nach einem der Ansprüche 17 bis 29, **dadurch gekennzeichnet**, daß die Elektroden (44) der elektrochemischen Anordnung aus Graphit oder einem leitfähigen Keramikmaterial bestehen.

32. Verwendung des Verfahrens nach einem der Ansprüche 1 bis 16 und/oder der Vorrichtung nach einem der ansprüche 17 bis 31 zur Teilenthärtung des Wassers.

33. Verwendung des Verfahrens nach einem der Ansprüche 1 bis 16 und/oder der Vorrichtung nach einem der Ansprüche 17 bis 31 zur Vermeidung von Steinabscheidungen an von dem Wasser durchströmten Wärmetauschern in Trink- und/oder Brauchwasseranlagen.

Fig. 1

Fig. 2

Fig. 3

Fig. 4

Fig. 6

Fig. 5

Fig. 7

Fig. 8

FIG. 9

**Europäisches Patentamt**

# EUROPÄISCHER RECHERCHENBERICHT

Nummer der Anmeldung

# EP 90 11 2740

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 552 420   (SOCIETE LYONNAIRE DES EAUX ET DE L'ECLARAGE)<br>* das ganze Dokument *<br>- - - | 1,4,6,7,<br>17,20,25 | C 02 F 5/02<br>C 02 F 1/46<br>C 02 F 1/48 |
| A | CH-A-3 526 33   (KURT MÜLLER)<br>* Anspruch 1; Figur 2 *<br>- - - | 1,17 | |
| A | CH-A-6 545 59   (CHRISTIAN J-P. ORSET)<br>* Ansprüche 1-11 *<br>- - - | 1,17 | |
| A | EP-A-0 171 357   (BATTELLE MEMORIAL INSTITUTE)<br>* Zusammenfassung; Figur 1 *<br>- - - - - | 1,17 | |

RECHERCHIERTE SACHGEBIETE (Int. Cl.5)

C 02 F

Der vorliegende Recherchenbericht wurde für alle Patentansprüche erstellt

| Recherchenort | Abschlußdatum der Recherche | Prüfer |
|---|---|---|
| Den Haag | 09 November 90 | GONZALEZ ARIAS M.L. |